# FASCICULE DE BREVET EUROPEEN

(11) **EP 3 642 169 B1**
(45) Date de publication et mention de la délivrance du brevet: **26.10.2022**
(21) Numéro de dépôt: 18748955.4
(22) Date de dépôt: 04.06.2018
(51) Int. Cl.: C03C 25/32, C03C 25/14, D04H 1/64, D04H 1/587, D04H 1/60

(54) **PROCÉDÉ DE FABRICATION D'UN PRODUIT D'ISOLATION À BASE DE FIBRES MINÉRALES**
VERFAHREN ZUR HERSTELLUNG EINES ISOLIERPRODUKTS AUS MINERALFASERN
METHOD FOR MANUFACTURING AN INSULATION PRODUCT MADE FROM MINERAL FIBRES

(30) Priorité: 23.06.2017 FR 1755761
(43) Date de publication de la demande: 29.04.2020
(73) Titulaire: SAINT-GOBAIN ISOVER, 92400 Courbevoie (FR)
(72) Inventeur: SALOMON, Pierre, 92400 Courbevoie (FR); AZEVEDO, Joël, 91190 Gif sur Yvette (FR); JAFFRENNOU, Boris, 75019 Paris (FR)
(74) Mandataire: Saint-Gobain Recherche
(86) Numéro de dépôt international: PCT/FR2018/051288
(87) Numéro de publication internationale: WO 2018/234652

(56) Documents cités:
- GB-A- 565 340
- US-A- 2 619 475
- DATABASE WPI Week 198712 Thomson Scientific, London, GB; AN 1987-080375 XP002784872, & CS 8 509 803 A (PRIDAL J) 15 janvier 1987 (1987-01-15)

## Description

La présente invention concerne un procédé de fabrication d'un produit d'isolation à base de fibres minérales liées par un liant organique bio-sourcé. Le procédé permet notamment la fabrication d'un produit d'isolation comprenant des fibres minérales sensibles aux acides sans que lesdites fibres ne soient altérées par l'acidité du liant organique. L'invention concerne également les produits obtenus par un tel procédé.

La fabrication de produits d'isolation à base de fibres minérales comprend généralement une étape de fabrication des fibres et une étape d'assemblage desdites fibres à l'aide d'une composition d'encollage.

La fabrication des fibres peut être réalisée par différents procédés. La méthode la plus connue est le fibrage par centrifugation (FR2500492, FR2579196, WO9110626, FR2443436, FR2529878), dans laquelle la matière minérale en fusion est projetée sur des roues de centrifugation (FR2500492, FR2579196, WO9110626) ou sur les parois d'un centrifugeur muni d'une multitude d'orifices (FR2443436, FR2529878) afin de former des filaments sous l'action de la force centrifuge. Les filaments formés sont ensuite étirés puis transportés vers un organe récepteur pour être déposés sous la forme d'une nappe ou d'un matelas de fibres minérales (ou laine minérale).

Afin d'assurer à la nappe de fibres une certaine cohésion, les fibres sont enduites d'une composition d'encollage contenant une résine thermodurcissable. Un traitement thermique, à une température généralement supérieure à 100°C, permet d'opérer le durcissement ou la polycondensation de la résine et obtenir ainsi un produit d'isolation thermique et/ou acoustique ayant des propriétés spécifiques, notamment une stabilité dimensionnelle, une résistance à la traction et une reprise d'épaisseur après compression. La composition d'encollage à projeter sur la laine minérale se présente généralement sous la forme d'une solution aqueuse contenant la résine thermodurcissable et des additifs tels que notamment un catalyseur de réticulation de la résine, un silane promoteur d'adhérence et une huile minérale anti-poussière. La composition d'encollage est le plus souvent appliquée sur les fibres par pulvérisation.

La réglementation relative à la santé humaine et à l'environnement impose ou incite expressément à ce que la résine, ou les composés qu'elle contient ou génère, aient un impact réduit sur l'environnement, et que les fibres minérales soient qualifiées comme non cancérogènes.

Les résines thermodurcissables les plus couramment utilisées dans la fabrication de produits d'isolation à base de fibres minérales sont des résines à base de formaldéhyde (urée-formaldéhyde, phénol-formaldéhyde, mélamine-formaldéhyde). Ces résines sont peu coûteuses, solubles dans l'eau et aptes à réticuler dans les conditions thermiques susmentionnées. Toutefois, elles peuvent encore contenir une certaine proportion de formaldéhyde libre dont les effets nocifs sont avérés par les études toxicologiques. Ces résines font alors l'objet d'un traitement par l'urée pour fixer ce formaldéhyde libre sous la forme de condensats non volatils. Or, ces condensats sont instables dans les conditions de températures auxquelles les nappes de fibres de verre sont soumises. Ils peuvent se décomposer en formaldéhyde et en ammoniaque (lui-même produit de la dégradation de l'urée) qui sont libérés dans l'atmosphère de traitement et doivent alors faire l'objet de procédures de captation pour réduire leur impact sur l'environnement. Des solutions de remplacement des résines à base de formaldéhyde dans les compositions d'encollage ont été développées. Un grand nombre d'entre elles sont fondées sur l'emploi de polymères d'acides carboxyliques et/ou de saccharides (WO2012168619, WO2012072938, WO2009080938, US2011260094), idéalement élaborés à partir de composés naturels issus de sources renouvelables à court terme, notamment végétales, ou produits par fermentation microbienne.

La cancérogénicité des fibres minérales dépend de leur bio-persistance dans le système respiratoire d'un être vivant, c'est-à-dire leur capacité à être éliminées et/ou dégradées naturellement par l'organisme. Cette bio-persistante des fibres minérales est notamment caractérisée par leur solubilité dans un liquide pulmonaire. D'après le règlement 1272/2008 du Parlement Européen et du Conseil, les fibres minérales ne sont pas classées comme cancérogènes si, lors de tests *in vivo*, les fibres minérales d'une longueur supérieure à 20µm ont une bio-persistance telle que leur demi-vie est inférieure à 10 jours pour un essai par inhalation, ou inférieure à 40 jours pour un essai par instillation intratrachéale.

L'article 7 du même règlement incite clairement à remplacer les essais sur animaux par des essais *in vitro.* Ainsi des tests *in vitro* simulant les deux environnements pulmonaires qu'une fibre minérale inhalée est susceptible de rencontrer ont ainsi été développés. Ils ont pour objectif de mesurer la vitesse de dissolution des fibres dans des solutions physiologiques à pH 7,4 (par exemple, une solution de Gamble simulant le liquide pulmonaire) et à pH 4,5 (par exemple, une solution simulant l'environnement à l'intérieur des phagolysosomes des macrophages et à la surface de macrophages activés). Des exemples de compositions de ces solutions physiologiques sont décrits dans les articles suivants : Sebastian et al., Glass Science Technologies, 75(5) : 263-270, 2002 ; Marques et al., Dissolution Technologies, 18(3):15-28,2011. Le résumé WPI avec le numéro d'accès (AN) 1987-080375 (voir aussi le document CS 8509803 A)divulgue un élément isolant en fibres d'aluminosilicate liés par un liant organique.

Le document US2619475-A divulgue un procédé de fabrication d'un produit d'isolation à base de fibres minérales avec une composition d'encollage comprenant une polymère a base d'alcool furfurylique.

Dans le cadre des recherches visant à mettre au point des liants plus durables pour laines minérales, c'est-à-dire des liants à base de composés provenant de ressources naturelles renouvelables à court terme, des problèmes de dégradation de certaines fibres minérales solubles en milieu physiologique acide ont été rencontrés pour certaines compositions d'encollage contenant des acides, en particulier des acides polycarboxyliques, ou libérant des acides pendant la phase de réticulation du liant. C'est en particulier le cas des compositions d'encollage acides, qui ont généralement un pH compris entre 1 et 5 lors de leur mise en contact avec les fibres, et qui dissolvent au moins partiellement certaines fibres. En conséquence, les propriétés mécaniques du produit final peuvent devenir médiocres.

La présente invention remédie à ces problèmes. Il s'est avéré qu'une résine bio-sourcée particulière permettait de remplacer avantageusement les liants connus pour lier les fibres minérales bio-solubles à pH acide. Cette résine est à base de poly(alcool furfurylique), dérivé du furfural obtenu par traitement de la biomasse. Elle permet de lier efficacement des fibres minérales bio-solubles à pH 4,5 sans les dissoudre et d'obtenir ainsi des produits d'isolation de laine minérale respectant les critères de non toxicité et présentant d'excellentes propriétés mécaniques. Ce résultat est également obtenu avec une résine neutralisée à base de poly(alcool furfurylique).

La présente invention concerne plus particulièrement un procédé de fabrication d'un produit d'isolation à base de fibres minérales liées par un liant organique, comprenant les étapes suivantes :
a. l'application d'une composition d'encollage sur lesdites fibres minérales,
b. la formation d'un assemblage desdites fibres minérales,
c. le chauffage dudit assemblage de fibres minérales jusqu'à durcissement (c'est-à-dire réticulation) de ladite composition d'encollage pour former un liant insoluble.
   ledit procédé est caractérisé par le fait que :
   - ladite composition d'encollage comprend les constituants suivants dans les limites définies ci-après exprimées en fractions massiques rapportées au poids total de la composition
      o de 80% à 98% d'eau,
      o de 2% à 20% de poly(alcool furfurylique) hydrosoluble,
      o moins de 0,5% d'alcool furfurylique, et
   - lesdites fibres minérales sont des fibres de verre aluminosilicate comprenant de l'oxyde d'aluminium, Al₂O₃, en une fraction massique comprise entre 14% et 28%.

Les résines utilisées dans la composition d'encollage utilisable selon l'invention sont des oligomères d'alcool furfurylique. Elles sont hydrosolubles, c'est-à-dire miscibles en toute proportion dans l'eau. Elles sont obtenues par polycondensation d'alcool furfurylique en présence d'un catalyseur acide. Elles présentent généralement un pH acide entre environ 4,5 et 5,5, une faible teneur en alcool furfurylique (fraction massique inférieure à 1%) et une viscosité à 25°C inférieure à 1000 mPa.s à 75% d'extrait sec selon la méthode Brookfield décrite dans la norme ASTM D2983.

Pour les besoins de l'invention, la résine peut être diluée et/ou additionnée d'agents correcteurs de pH.

La composition d'encollage utilisable selon la présente invention comprend donc essentiellement :
- de l'eau,
- des oligomères d'alcool furfurylique, appelés ci-après poly(alcool furfurylique),
- généralement, mais en faible proportion, de l'alcool furfurylique résiduel n'ayant pas réagi,
- et, éventuellement, un sel résultant de la neutralisation de l'acide organique ou minéral ayant servi de catalyseur de polycondensation.

La composition d'encollage peut contenir un certain nombre d'additifs présents classiquement dans les compositions d'encollage diluées et destinées à être appliquées sur les fibres. Ces additifs peuvent être ajoutés au moment de la dilution de la composition, ou à la composition concentrée avant dilution avec de l'eau. Ces additifs doivent être chimiquement stables et ne pas réagir avec les composants de la composition d'encollage utilisable selon la présente invention, lorsque cette composition d'encollage est stockée dans des conditions de stockage similaires à celles utilisées pour la résine d'alcool furfurylique qu'elle contient. Des exemples d'additifs sont :
- les agents de couplage choisis parmi les silanes fonctionnels ; un silane fonctionnel comporte généralement au moins une, de préférence deux ou trois fonctions alcoxysilyle hydrolysables, et au moins une fonction réactive (oxirane, amine, hydroxyle, halogénure) portée par un groupe organique non hydrolysable, lié à l'atome de silicium par une liaison Si-C ;
- les agents hydrophobes, par exemple des silicones ;
- les agents anti-poussière, en particulier les huiles minérales généralement ajoutées sous forme d'émulsion aqueuse éventuellement en présence d'un ou plusieurs agents tensioactifs ;
- des agents retardateurs de feu, par exemple de type phosphate ou organophosphate ;
- des agents antistatiques, assouplissants ou conditionneurs, colorants;
- des charges organiques solubles ou dispersibles (extenders) ainsi que des additifs solides particulaires tels que des agents opacifiants.

La fraction massique en adjuvants et additifs de la partie solide de la composition d'encollage n'excède généralement pas 20 à 25%.

Dans la composition d'encollage de la présente invention la somme des fractions massiques du poly(alcool furfurylique) et de l'eau est au moins 95%, de préférence au moins 96%, en particulier au moins 97% et idéalement au moins 98%.

La fraction massique en poly(alcool furfurylique) dans la composition d'encollage est comprise entre 2% et 20%, de préférence entre 5% et 15%.

Ces valeurs de fractions massiques en eau et poly(alcool furfurylique) sont nécessaires pour que la composition d'encollage ait une viscosité adaptée, généralement inférieure à quelques dizaines de mPa.s à 25°C selon la méthode Brookfield décrite dans la norme ASTM D2983, pour pouvoir être appliquée sur les fibres minérales par pulvérisation.

La teneur résiduelle en alcool furfurylique monomère de la solution de la présente invention est de préférence la plus faible possible. L'alcool furfurylique (numéro CAS 98-00-0) est en effet un composé organique volatil (COV) considéré comme nocif par contact cutané, inhalation et par ingestion. La fraction massique d'alcool furfurylique dans la composition d'encollage est moins de 0,5%, de préférence moins de 0,1%.

A haute température la résine comprise dans la composition d'encollage réticule par polycondensation en présence d'un catalyseur acide et forme un liant insoluble. Par conséquent, la composition d'encollage est généralement acide. Toutefois, elle peut être neutralisée par l'ajout d'une base afin d'en augmenter la stabilité au stockage, c'est-à-dire de réduire la vitesse à laquelle la résine réagit spontanément à la température de stockage en sorte que sa viscosité augmente. Une telle neutralisation peut être avantageuse pour le transport ou la conservation de la solution d'encollage.

La composition d'encollage selon l'invention a donc un pH compris entre 3,0 et 10,0, de préférence entre 4,0 et 9,0, en particulier dans la plage de 5,0 à 8,5, et idéalement dans la plage de 6,0 à 8,0.

La sensibilité des fibres de verre aluminosilicate aux acides dépend de la teneur en oxyde d'aluminium qu'elles contiennent. Dans les verres d'aluminosilicates, l'aluminium est sous forme ionique Al³⁺. Les ions aluminium sont dits formateurs de réseaux car ils participent à la structure du verre en formant avec les ions oxygène des tétraèdres de coordination, un ou plusieurs desdits atomes d'oxygène étant partagé(s) avec des tétraèdres de coordination formés par le silicium sous forme ionique Si⁴⁺. Or, l'oxyde d'aluminium est un amphotère, c'est-à-dire qu'il se comporte à la fois comme une base et comme un acide. Cette propriété a pour conséquence de le rendre particulièrement réactif, même lorsqu'il est contenu dans un verre. Lorsqu'une fibre de verre d'aluminosilicate comprenant de l'oxyde d'aluminium est en contact avec un milieu acide, ledit milieu réagit préférentiellement avec les ions aluminium, provoquant ainsi une destruction du réseau que les ions Al³⁺ forment avec les ions silicium, et la dissolution du verre. La teneur en oxyde d'aluminium des fibres de verre aluminosilicate est donc une caractéristique essentielle et déterminante de leur degré de solubilité dans les milieux acides.

Les fibres de verre aluminosilicate deviennent solubles dans les milieux acides lorsque la fraction massique d'oxyde d'aluminium qu'elles contiennent est d'au moins 14%, en particulier d'au moins 16%, voire d'au moins 18%. La fraction massique maximale en oxyde d'aluminium ne dépasse généralement pas une certaine limite au-delà de laquelle la fabrication des fibres devient particulièrement difficile. Elle est d'au plus 28%, de préférence d'au plus 26%, voire d'au plus 24%.

Dans des modes de réalisation de l'invention, il est avantageux que les fibres minérales d'aluminosilicates soient davantage sensibles aux acides afin de diminuer leur bio-persistance telle que leur demi-vie soit inférieure à certaines valeurs établies par des exigences réglementaires particulières, des politiques de santé publique ou encore selon la volonté propre du fabricant.

Certains de ces modes consistent à ajouter d'autres oxydes aux dites fibres minérales, ou encore à changer les fractions massiques des oxydes qu'elles comprennent.

Dans un premier mode de réalisation, parce que le silicium, sous sa forme ionique, participe à la formation de la structure desdites fibres, la fraction massique d'oxyde de silicium, SiO₂, que lesdites fibres contiennent est adaptée. Ainsi, la sensibilité aux acides augmente lorsque cette fraction massique est comprise dans la plage allant de 32% à 50%, en particulier de 33% à 48%, voire de 34% à 46%.

L'aluminium et le silicium participant tous deux à la formation de la structure du verre aluminosilicate, il est également possible d'ajouter de l'oxyde de silicium de manière à ce que la somme des fractions massiques de l'oxyde d'aluminium Al₂O₃ et dudit oxyde de silicium SiO₂ soit comprise dans un certain intervalle de valeurs. La somme des fractions massiques Al₂O₃ et SiO₂ desdites fibres minérales est de préférence comprise entre 46% et 78%, en particulier entre 47% et 76%, voire entre 48% et 74%.

Dans un autre mode de réalisation de l'invention, la composition des fibres minérales peut être telle que le rapport molaire Al³⁺/(Al³⁺+Si⁴⁺) est supérieur à 0,25, en particulier supérieur à 0,30, de préférence supérieur à 0,35.

Les fibres de verre aluminosilicate peuvent comprendre en outre d'autres oxydes, tels que les oxydes de métaux alcalins et d'alcalino-terreux. Les métaux alcalins ou alcalino-terreux ont un rôle de modificateur du réseau formé par les tétraèdres de coordination autour des ions Si⁴⁺ et Al³⁺. La sensibilité des fibres minérales aux acides peut être affectée par la nature et la quantité d'oxydes de métaux alcalins et d'alcalino-terreux.

Les fibres minérales selon un mode de réalisation de la présente invention peuvent donc comprendre les oxydes CaO et MgO, la somme des fractions massiques desdits oxydes étant de préférence comprise entre 7% et 32%. Elles peuvent également comprendre les oxydes Na₂O et K₂O en des quantités telles que la somme des fractions massiques desdits oxydes est comprise entre 1% et 15%, de préférence entre 2% et 15%

Les fibres minérales d'aluminosilicate utilisées dans la présente invention présentent de préférence un coefficient de dissolution calculé à partir de la quantité de SiO₂ desdites fibres minérales qui est dissoute dans un fluide pulmonaire synthétique de pH 4,5, thermo-régulé à 37°C, après 14 jours d'immersion dans ledit fluide. Un protocole expérimental permettant le calcul d'un tel coefficient de dissolution est décrit de manière très précise par Sebastian K. et al. dans EURIMA test guideline: In-vitro acellular dissolution of man-made vitreous silicate fibres. Glass science and technology, 2002. 75(5): p. 263-270.

Des fibres de verre aluminosilicate ayant un coefficient de dissolution supérieur à 100 ng.cm⁻².h⁻¹, en particulier supérieur à 200 ng.cm⁻².h⁻¹, de préférence supérieur à 400 ng.cm⁻².h⁻¹, satisfont aux exigences du règlement 1272/2008 du Parlement Européen et du Conseil. Lors de tests *in-vivo*, leur demi-vie est inférieure à 10 jours pour un essai par inhalation, ou inférieure à 40 jours pour un essai par instillation intratrachéale.

Dans un mode de réalisation préféré du procédé de l'invention, l'étape (a) d'application de la solution d'encollage sur les fibres minérales peut être réalisée par pulvérisation au moyen de buses de pulvérisation. L'application de la composition d'encollage précède de préférence l'étape (b) d'assemblage, pendant laquelle les fibres encollées sont rassemblées, par exemple dans un moule ou sur un convoyeur avant d'être chauffées de manière consécutive ou extemporanée pour réticuler et durcir le liant. Les fibres peuvent être assemblées,
- en matelas souples, enroulables et compressibles ou pliables,
- en plaques ou panneaux de fibres, plus denses et rigides que les matelas enroulables,
- en produits moulés à base de fibres, par exemple des doublures de conduits ou de canalisations,
- en textiles non-tissés, tels que des mats non-tissés de fibres de verre.

L'étape (c) de chauffage de l'assemblage de fibres est mise en œuvre de préférence à une température comprise entre 100°C et 250°C pendant une durée comprise entre 1 minute et 10 minutes, de préférence dans une atmosphère thermo-régulée.

La présente invention a également pour objet un produit susceptible d'être obtenu par l'un des quelconques modes de réalisation du procédé de l'invention. Le produit obtenu, qui comprendra un polymère d'alcool furfurylique, présentera une stabilité dimensionnelle, une résistance à la traction et une reprise d'épaisseur après compression supérieures à celles d'un produit obtenu selon l'état de la technique et comprenant un liant à base de polymères d'acides carboxyliques et/ou de saccharides, et ce pour un même type de fibres minérales ayant une fraction massique d'oxyde d'aluminium entre 14% et 28%.

L'apport de la présente invention est clairement illustré par les deux exemples décrits ci-après et les figures auxquelles ces deux exemples réfèrent.
La figure 1 est une micrographie électronique de l'interface entre un substrat plan minéral de composition Verre 1 et un revêtement organique obtenu par réticulation de la composition d'encollage 1 (comparative).
La figure 2 est une micrographie électronique de l'interface entre un substrat plan minéral de composition Verre 1 et un revêtement organique obtenu par réticulation de la composition d'encollage 2 (comparative).
La figure 3 est une micrographie électronique de l'interface entre un substrat plan minéral de composition Verre 1 et un revêtement organique obtenu par réticulation de la composition d'encollage 3 (utilisable selon l'invention).
La figure 4 est une micrographie électronique de l'interface entre un substrat plan minéral de composition Verre 2 et un revêtement organique obtenu par réticulation de la composition d'encollage 1 (comparative).
La figure 5 est une micrographie électronique de l'interface entre un substrat plan minéral de composition Verre 2 et un revêtement organique obtenu par réticulation de la composition d'encollage 2 (comparative).
La figure 6 est une micrographie électronique de l'interface entre un substrat plan minéral de composition Verre 2 et un revêtement organique obtenu par réticulation de la composition d'encollage 3 (utilisable selon l'invention).

Dans les exemples, une composition d'encollage utilisable selon l'invention est comparée à deux compositions d'encollage selon l'état de la technique et qui ne permettant pas de résoudre le problème technique. La composition d'encollage utilisable selon l'invention a été utilisée sur deux compositions de verre pour fibres minérales sensibles aux acides. A des fins de comparaison les deux compositions d'encollage selon l'état de la technique ont été utilisées sur les deux mêmes compositions de verre pour fibres minérales sensibles aux acides.

L'effet de l'acidité des compositions d'encollage a été qualifié en comparant la qualité des interfaces formées entre lesdites compositions d'encollage, une fois durcies ou réticulées, et les deux compositions de verre pour fibres minérales mises sous la forme de substrats plans. L'utilisation de substrats plans, au lieu de fibres, est préférée pour des raisons pratiques. Ils permettent en effet de simuler l'interface entre les fibres et les dites compositions d'encollage et d'en faciliter l'observation à l'aide d'un microscope. La qualité de l'interface fournit une information qualitative sur le niveau d'adhésion entre le substrat et la fibre, notamment après un test de vieillissement. Notamment, la présence de fissures ou de décollements sera la manifestation d'une détérioration de la surface du substrat par la composition d'encollage qui y a été déposée.

Les deux compositions de verre biosolubles à pH 4,5 utilisées pour les substrats plans sont celles présentées dans le tableau 1. Ces substrats ont été fabriqués selon les méthodes usuelles de l'industrie verrière. Sont également indiquées dans ce tableau, les valeurs des sommes des fractions massiques, Al₂O₃ + SiO₂, CaO + MgO et Na₂O + K₂O, du rapport molaire Al³⁺/(Al³⁺+Si⁴⁺) et du coefficient de dissolution, k, calculé à partir de la quantité de SiO₂ desdites fibres de verre qui est dissoute dans un fluide pulmonaire synthétique de pH 4,5, thermo-régulée à 37°C, après 14 jours selon le protocole dont il a été fait référence ci-dessus.

Les trois compositions d'encollage, ainsi que leur pH, sont décrites dans le tableau 2. Les compositions d'encollage 1 et 2 correspondent à des compositions d'encollage selon l'état de la technique. La composition d'encollage 3 est une composition d'encollage utilisable selon l'invention.

La composition d'encollage 1 est préparée en deux étapes :
a) l'anhydride maléique et la tetraethylènepentamine sont mélangés dans un premier récipient puis le mélange est mis en réserve à une température comprise entre 20 et 25°C pendant 15 minutes ;
b) le mélange obtenu à l'étape a), le saccharose, le sulfate d'ammonium et le silane sont mélangés sous agitation jusqu'à dissolution complète des constituants.

Les compositions d'encollage 2 et 3 sont préparées en mélangeant l'ensemble des constituants en une seule étape.

Aux fins des tests, les compositions d'encollage sont plus concentrées en résine que les compositions d'encollage utilisées pour l'application sur les fibres minérales. La concentration de chaque composition est choisie pour que la viscosité soit adaptée à une application sur un substrat plan, et les conditions du traitement thermique sont choisies pour que la cinétique des éventuelles réactions entre lesdites compositions d'encollage et lesdits substrats soit accélérée. Les mêmes résultats peuvent être obtenus avec des compositions d'encollage présentant un taux de dilution de résine plus important en laissant davantage évaporer l'eau qu'elles contiennent. Le test est ainsi représentatif de la formation d'un film de liant à la surface du verre dans les conditions de fabrication de la laine minérale.

Le protocole utilisé pour le test de qualification de l'effet de l'acidité est le suivant :
- nettoyage des surfaces des substrats plans à l'eau déionisée et à l'éthanol ;
- traitement par flamme desdites surface, à l'aide d'un chalumeau de laboratoire, de manière à éliminer toute pollution de nature organique ;
- refroidissement des surfaces à température ambiante ;
- dépôt des compositions d'encollage sur les substrats plans par sérigraphie afin de former un revêtement durci ou réticulé ayant une épaisseur d'environ 20µm ;
- cuisson à 210°C pendant 20min des échantillons ainsi fabriqués dans un four adapté, le four ayant été préalablement chauffé à 550°C puis refroidi afin de prévenir toute pollution de nature organique ;
- vieillissement accéléré des échantillons en autoclave à 105°C, 1,2 bars pendant 15min ;
- découpe des échantillons en section transversale de manière à pouvoir observer l'interface entre le revêtement organique et le substrat plan ;
- observation des sections ainsi obtenues à l'aide d'un microscope électronique à balayage dont la tension d'accélération est fixée à 15kV, le grossissement fixé à x10000 et le mode de détection est le mode de détection des électrons secondaires ;

**Tableau 1. Compositions des fibres de verre exprimées en fractions massiques d'oxydes.**

| | **Verre 1** | **Verre 2** |
|---|---|---|
| **SiO₂** | 43 | 41,5 |
| **Al₂O₃** | 24,2 | 15,4 |
| **Na₂O** | 6,6 | 1,7 |
| **K₂O** | 4 | 1,5 |
| **CaO** | 14,5 | 25,6 |
| **MgO** | 1,5 | 6,4 |
| **Fe₂O₃** | 5,5 | 5,5 |
| **B₂O₃** | - | - |
| **P₂O₁** | 0,7 | 0,4 |
| **Al₂O₃ + SiO₂** | 67,2 | 56, 9 |
| **CaO** + **MgO** | 16 | 32 |
| **Na₂O** + **K₂O** | 10,6 | 3,2 |
| **k(ng.cm⁻².h⁻¹)** | ~600 | ~250 |
| **Al³⁺/(Al³⁺+Si⁴⁺)** | 0,40 | 0,30 |

**Tableau 2. Compositions des solutions d'encollage exprimées en fractions massiques des constituants secs.**

| | **Composition 1 (comparative)** | **Composition 2 (comparative)** | **Composition 3 (invention)** |
|---|---|---|---|
| **Saccharose** | 34 | | |
| **Tetraethylènepentamine** | 4,9 | | |
| **Anhydride maléique** | 5,1 | | |
| **Sulfate d'ammonium** | 6 | | |
| **Maltitol** | | 30,3 | |
| **Acide citrique** | | 24,6 | |
| **Poly(alcool furfurylique)** | | | 66,3 |
| **Hypophosphite de sodium** | | 2,4 | |
| **Silane** | 2,5 | 2,4 | 2,5 |
| **Eau** | 47,5 | 40,3 | 31,2 |
| **pH** | 6 | 1-2 | 5 |

### Exemple 1

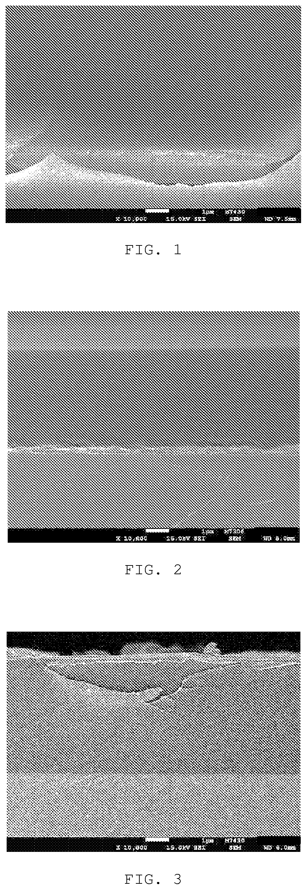

Dans le premier exemple, les trois compositions d'encollage du tableau 2 ont été déposées sur un substrat plan de composition Verre 1 du tableau 1 selon le protocole décrit précédemment. Les figures 1, 2 et 3 présentent les micrographies électroniques des interfaces obtenues entre ledit substrat et les trois revêtements organiques respectivement. Le substrat est situé en bas des micrographies, le revêtement en haut. Sur les figures 1 et 2, obtenues avec des compositions d'encollage selon l'état de la technique, les interfaces sont dégradées. Sur la figure 1, l'interface est fissurée et fracturée. Sur la figure 2, l'interface présente des microfissures qui se propagent dans le substrat et le revêtement organique. En revanche, sur la figure 3, qui correspond à un produit obtenu avec une composition d'encollage utilisable selon l'invention, l'interface est lisse, plane et ne présente aucun défaut de fissuration ou de décollement.

### Exemple 2

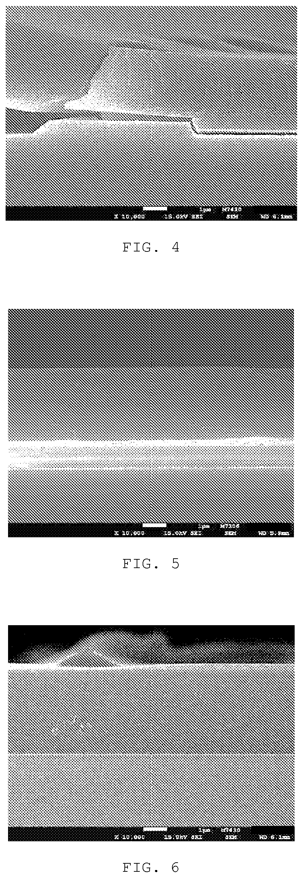

Dans le deuxième exemple, les trois compositions d'encollage du tableau 2 ont été déposées sur un substrat plan de composition Verre 2 du tableau 1 selon le protocole décrit précédemment. Les figures 4, 5 et 6 présentent les micrographies électroniques des interfaces obtenues entre ledit substrat et les trois revêtements organiques respectivement. Le substrat est situé en bas des micrographies, le revêtement organique en haut. Sur les figures 4 et 5, obtenues avec des compositions d'encollage selon l'état de la technique, les interfaces sont dégradées. Elles sont fissurées et fracturées avec une désolidarisation prononcée de la matière. En revanche, sur la figure 6, obtenue avec une composition d'encollage utilisable selon l'invention, l'interface est lisse, plane et ne présente aucun défaut de fissuration ou de décollement.

### Exemple 3

Dans le troisième exemple, deux produits d'isolation industriels ont été fabriqués à l'aide de deux compositions d'encollage, l'une selon l'état de la technique et l'autre utilisable selon l'invention. Ces deux compositions d'encollage correspondent respectivement aux compositions d'encollage 1 et 3 avec une dilution plus importante. Les fractions massiques de leurs constituants sont indiquées dans le tableau 3. La composition des fibres minérales sur lesquelles ces deux compositions d'encollage ont été appliquées est celle du verre 1 du tableau 1. Les fibres minérales ont été enduites de composition d'encollage avant d'être assemblées et chauffées à 200°C. La densité des produits industriels obtenus est d'environ 16kg.m⁻³. La fraction massique de liant dans le produit final, obtenu à la suite du séchage et du durcissement des compositions d'encollage, est d'environ 5%.

La résistance mécanique des produits d'isolation est dépendante de la qualité des interfaces entre le liant et les fibres. Cette qualité peut évoluer dans le temps avec le vieillissement du produit. Elle peut notamment se dégrader. Cette dégradation est d'autant plus importante que le degré de dégradation des fibres minérales par le liant ou le degré de dégradation du liant lui-même est élevé. La mesure des variations de la résistance mécanique avant et après vieillissement fournit donc une indication qualitative et quantitative du degré de dégradation des fibres minérales par le liant, ou du degré de dégradation du liant lui-même.

A des fins de démonstration des avantages de l'invention, les deux produits d'isolation ont été soumis à un traitement climatique pendant 15 minutes dans une enceinte thermo-régulée à 105°C avec une humidité relative de 100% afin de simuler leur vieillissement de manière accélérée. La résistance à la traction des produits d'isolation industriels, avant et après traitement climatique, a été mesurée à l'aide d'un essai mécanique selon la norme ASTM C686-71T. Sur chaque produit, avant et après traitement climatique, une série d'échantillon a été découpé par estampage. Chaque échantillon a la forme d'un anneau ayant une longueur de 122mm, une largeur de 46mm, un rayon de courbure de la découpe du bord extérieur égal à 38mm et un rayon de courbure de la découpe du bord intérieur égal à 12,5mm. L'échantillon est disposé entre deux mandrins cylindriques d'une machine d'essai dont l'un est mobile et se déplace à vitesse constante. La résistance à la traction est le rapport de la force de rupture F mesurée en Newton sur la masse M de l'échantillon. L'unité de la résistance à la traction est le Newton/gramme ou N.g⁻¹.

Les valeurs des résistances mécaniques des deux produits avant et après traitement climatiques sont indiquées dans le tableau 4. Avant traitement climatique, les deux produits d'isolation ont des valeurs de résistance à la traction comparables. Ceci est remarquable et d'autant plus surprenant que l'encollage selon l'invention est 10 fois plus acide que l'encollage de l'exemple comparatif. Après traitement climatique, la valeur de résistance à la traction du produit 1, fabriqué à l'aide d'une composition d'encollage selon l'état de la technique, diminue de 53% alors que celle du produit 2, fabriqué à l'aide d'une composition d'encollage utilisable selon l'invention, ne diminue que de 14%. Après vieillissement, la perte de résistance mécanique à la traction est donc près de quatre fois moins importante pour un produit susceptible d'être obtenu selon l'invention que pour un produit susceptible d'être obtenu selon l'état de la technique.

**Tableau 3. Compositions des solutions d'encollage exprimées en fractions massiques des constituants secs.**

| | **Composition 1 diluée (comparative)** | **Composition 3 diluée (invention)** |
|---|---|---|
| **Saccharose** | 3,9 | |
| **Tetraethylènepentamine** | 0,5 | |
| **Anhydride maléique** | 0,6 | |
| **Sulfate d'ammonium** | 0,7 | |
| **Poly(alcool furfurylique)** | | 5,8 |
| **Alcool furfurylique** | | <0,02 |
| **Silane** | 0,3 | 0,2 |
| **Eau** | 94 | 94 |

**Tableau 4. Résistances à la traction (N.g⁻¹) des produits d'isolation industriels fabriqués à l'aide des compositions d'encollage du tableau 3.**

| | **Produit 1 (comparatif)** | **Produit 3 (invention)** |
|---|---|---|
| **Composition des fibres minérales** | Verre 1 | Verre 1 |
| **Composition d'encollage** | Composition 1 diluée | Composition 3 diluée |

| **Résistance à la traction** | | |
|---|---|---|
| **Avant traitement climatique** | 3,8 N.g⁻¹ | 3,6 N.g⁻¹ |
| **Après traitement climatique** | 1,8 N.g⁻¹ | 3,1 N.g⁻¹ |

## Revendications

1. Procédé de fabrication d'un produit d'isolation à base de fibres minérales liées par un liant organique, comprenant les étapes suivantes :
a. l'application d'une composition d'encollage sur lesdites fibres minérales,
b. la formation d'un assemblage desdites fibres minérales,
c. le chauffage dudit assemblage de fibres minérales jusqu'à durcissement de ladite composition d'encollage, **caractérisé en ce que** :
- ladite composition d'encollage comprend les constituants suivants dans les limites définies ci-après, exprimées en fractions massiques rapportées au poids total de la composition :
o de 80% à 98% d'eau,
o de 2% à 20% de poly(alcool furfurylique) hydrosoluble et
o moins de 0,5% d'alcool furfurylique, et
- la somme des fractions massiques du poly(alcool furfurylique) et de l'eau dans ladite composition d'encollage est d'au moins 95%, et
- lesdites fibres minérales sont des fibres de verre aluminosilicate comprenant de l'oxyde d'aluminium, Al₂O₃, en une fraction massique comprise entre 14% et 28%.

2. Procédé selon la revendication 1, tel que lesdites fibres minérales ont une fraction massique en SiO₂ comprise entre 32% et 50%.

3. Procédé selon l'une quelconque des revendications précédentes, tel que la somme des fractions massiques Al₂O₃ et SiO₂ desdites fibres minérales est comprise entre 46% et 78%.

4. Procédé selon l'une quelconque des revendications précédentes, tel que lesdites fibres minérales ont un rapport molaire Al³⁺/(Al³⁺+Si⁴⁺) supérieur à 0,25, en particulier supérieur à 0,30, de préférence supérieur à 0,35.

5. Procédé selon l'une quelconque des revendications précédentes, tel que les dites fibres minérales comprennent en outre les oxydes CaO et MgO, la somme des fractions massiques desdits oxydes étant comprise entre 7% et 32%.

6. Procédé selon l'une quelconque des revendications précédentes, tel que les dites fibres minérales comprennent en outre les oxydes Na₂O et K₂O, la somme des fractions massiques desdits oxydes étant comprise entre 1% et 15%.

7. Procédé selon l'une quelconque des revendications précédentes tel que lesdites fibres minérales ont un coefficient de dissolution supérieur à 100 ng.cm⁻².h⁻¹, en particulier supérieur à 200 ng.cm⁻².h⁻¹, de préférence supérieur à 400 ng.cm⁻².h⁻¹, ledit coefficient de dissolution étant calculé à partir de la quantité de SiO₂ desdites fibres minérales qui est dissoute dans un fluide pulmonaire synthétique de pH 4,5, thermo-régulée à 37°C, après 14 jours.

8. Procédé selon l'une quelconque des revendications précédentes, tel que la somme des fractions massiques du poly(alcool furfurylique) et de l'eau est au moins 95%, de préférence au moins 96%, en particulier au moins 97% et idéalement au moins 98%.

9. Procédé selon l'une quelconque des revendications précédentes, tel que la teneur en alcool furfurylique de la composition d'encollage est inférieure à 0,1%.

10. Procédé selon l'une quelconque des revendications précédentes, tel que ladite composition d'encollage comprend en outre un ou plusieurs adjuvants choisis de préférence parmi les agents de couplage, les agents anti-poussière, les agents hydrophobes, les agents retardateurs, les agents antistatiques, les agents assouplissants, les agents conditionneurs, les agents colorants, les agents opacifiants.

11. Procédé selon la revendication 10, tel que la fraction massique en adjuvants et additifs de la partie solide de la composition d'encollage n'excède pas 25%, de préférence 20%.

12. Procédé selon l'une quelconque des revendications précédentes, tel que ladite composition d'encollage présente un pH compris entre 3,0 et 10, de préférence entre 4,0 et 9,0, en particulier entre 5,0 et 8,5, et idéalement entre 6,0 et 8,0.

13. Procédé selon l'une quelconque des revendications précédentes, tel que l'application de ladite composition d'encollage de l'étape a) sur lesdites fibres minérales se fait par pulvérisation au moyen de buses de pulvérisation.

14. Procédé selon l'une quelconque des revendications précédentes, tel que l'étape c) comprend le chauffage dudit assemblage de fibres minérales à une température comprise entre 100°C et 250°C pendant une durée comprise entre 1 minute et 10 minutes, de préférence dans une atmosphère thermo-régulée.

15. Produit susceptible d'être obtenu par un procédé selon l'une quelconque des revendications précédentes.

## Patentansprüche

1. Verfahren zur Herstellung eines Isolierprodukts auf Basis von Mineralfasern, die durch ein organisches Bindemittel gebunden sind, umfassend die folgenden Schritte:
a. die Auftragung einer Leimungszusammensetzung auf die Mineralfasern,
b. die Bildung einer Anordnung der Mineralfasern,
c. die Erwärmung der Anordnung von Mineralfasern bis zum Aushärten der Leimungszusammensetzung, **dadurch gekennzeichnet, dass**:
- die Leimungszusammensetzung die folgenden Bestandteile innerhalb der nachfolgend definierten Grenzen, ausgedrückt in Massenanteilen, bezogen auf das Gesamtgewicht der Zusammensetzung, umfasst:
o zu 80 % bis 98 % Wasser,
o zu 2 % bis 20 % wasserlöslichen Poly(furfurylalkohol) und
o zu weniger als 0,5 % Furfurylalkohol und
- die Summe der Massenanteile von Poly(furfurylalkohol) und von Wasser in der Leimungszusammensetzung mindestens 95 % beträgt und
- die Mineralfasern Aluminosilikatglasfasern sind, die Aluminiumoxid, Al₂O₃, in einem Massenanteil zwischen 14 % und 28 %, umfassen.

2. Verfahren nach Anspruch 1, wobei die Mineralfasern einen SiO₂-Massenanteil zwischen 32 % und 50 % aufweisen.

3. Verfahren nach einem der vorstehenden Ansprüche, wobei die Summe der Al₂O₃- und SiO₂-Massenanteile der Mineralfasern zwischen 46 % und 78 % liegt.

4. Verfahren nach einem der vorstehenden Ansprüche, wobei die Mineralfasern ein Al³⁺/(Al³⁺+Si⁴⁺)-Molverhältnis von größer als 0,25, insbesondere größer als 0,30, vorzugsweise größer als 0,35, aufweisen.

5. Verfahren nach einem der vorstehenden Ansprüche, wobei die Mineralfasern zusätzlich die Oxide CaO und MgO umfassen, wobei die Summe der Massenanteile der Oxide zwischen 7 % und 32 % liegt.

6. Verfahren nach einem der vorstehenden Ansprüche, wobei die Mineralfasern zusätzlich die Oxide Na₂O und K₂O umfassen, wobei die Summe der Massenanteile der Oxide zwischen 1 % und 15 % liegt.

7. Verfahren nach einem der vorstehenden Ansprüche, wobei die Mineralfasern einen Auflösungskoeffizienten größer als 100 ng.cm⁻².h⁻¹, insbesondere größer als 200 ng.cm⁻².h⁻¹, vorzugsweise größer als 400 ng.cm⁻².h⁻¹, aufweisen, wobei der Auflösungskoeffizient ausgehend von der SiO₂-Menge der Mineralfasern errechnet wird, die in einer synthetischen Lungenflüssigkeit mit pH-Wert von 4,5, temperaturgeregelt auf 37 °C, nach 14 Tagen aufgelöst wird.

8. Verfahren nach einem der vorstehenden Ansprüche, wobei die Summe der Massenanteile von Poly(furfurylalkohol) und Wasser mindestens 95 %, vorzugsweise mindestens 96 %, insbesondere mindestens 97 % und idealerweise mindestens 98 % beträgt.

9. Verfahren nach einem der vorstehenden Ansprüche, wobei der Furfurylalkoholgehalt der Leimungszusammensetzung weniger als 0,1 % beträgt.

10. Verfahren nach einem der vorstehenden Ansprüche, wobei die Leimungszusammensetzung zusätzlich einen oder mehrere Hilfsstoffe enthält, die vorzugsweise aus Kopplungsmitteln, Antistaubmitteln, hydrophoben Mitteln, Verzögerungsmitteln, Antistatikmitteln, Weichmachern, Konditionierungsmitteln, Färbemitteln und Trübungsmitteln ausgewählt sind.

11. Verfahren nach Anspruch 10, wobei der Massenanteil an Hilfs- und Zusatzstoffen in dem festen Teil der Leimungszusammensetzung 25 %, vorzugsweise 20 %, nicht überschreitet.

12. Verfahren nach einem der vorstehenden Ansprüche, wobei die Leimungszusammensetzung einen pH-Wert zwischen 3,0 und 10, vorzugsweise zwischen 4,0 und 9,0, insbesondere zwischen 5,0 und 8,5 und idealerweise zwischen 6,0 und 8,0 aufweist.

13. Verfahren nach einem der vorstehenden Ansprüche, wobei die Auftragung der Leimungszusammensetzung von Schritt a) auf die Mineralfasern durch Sprühen mittels Sprühdüsen erfolgt.

14. Verfahren nach einem der vorstehenden Ansprüche, wobei Schritt c) das Erwärmen der Anordnung von Mineralfasern auf eine Temperatur zwischen 100 °C und 250 °C während einer Dauer zwischen 1 Minute und 10 Minuten, vorzugsweise in einer temperaturgeregelten Atmosphäre, umfasst.

15. Produkt, das durch ein Verfahren nach einem der vorstehenden Ansprüche erhalten werden kann.

## Claims

1. Process for the manufacture of an insulating product based on mineral fibres bonded by an organic binder, comprising the following stages:
a. the application of a sizing composition to the said mineral fibres,
b. the formation of an assembly of the said mineral fibres,
c. the heating of the said assembly of mineral fibres until the said sizing composition has cured,
**characterized in that**:
- the said sizing composition comprises the following constituents within the limits defined below, expressed as fractions by weight with respect to the total weight of the composition:
o from 80% to 98% of water,
o from 2% to 20% of water-soluble poly(furfuryl alcohol) and
o less than 0.5% of furfuryl alcohol, and
- the sum of the fractions by weight of the poly(furfuryl alcohol) and of the water is advantageously at least 95%, and
- the said mineral fibres are fibres of aluminosilicate glass comprising aluminium oxide, Al₂O₃, in a fraction by weight of between 14% and 28%.

2. Process according to Claim 1, such that the said mineral fibres have a fraction by weight of SiO₂ of between 32% and 50%.

3. Process according to either one of the preceding claims, such that the sum of the Al₂O₃ and SiO₂ fractions by weight of the said mineral fibres is between 46% and 78%.

4. Process according to any one of the preceding claims, such that the said mineral fibres have an Al³⁺/(Al³⁺ + Si⁴⁺) molar ratio of greater than 0.25, in particular of greater than 0.30, preferably of greater than 0.35.

5. Process according to any one of the preceding claims, such that the said mineral fibres additionally comprise the oxides CaO and MgO, the sum of the fractions by weight of the said oxides being between 7% and 32%.

6. Process according to any one of the preceding claims, such that the said mineral fibres additionally comprise the oxides Na₂O and K₂O, the sum of the fractions by weight of the said oxides being between 1% and 15%.

7. Process according to any one of the preceding claims, such that the said mineral fibres have a dissolution coefficient of greater than 100 ng.cm⁻².h⁻¹, in particular of greater than 200 ng.cm⁻².h⁻¹, preferably of greater than 400 ng.cm⁻².h⁻¹, the said dissolution coefficient being calculated from the amount of SiO₂ of the said mineral fibres which is dissolved in a synthetic pulmonary fluid of pH 4.5, thermally regulated at 37°C, after 14 days.

8. Process according to any one of the preceding claims, such that the sum of the fractions by weight of the poly(furfuryl alcohol) and of the water is at least 95%, preferably at least 96%, in particular at least 97% and ideally at least 98%.

9. Process according to any one of the preceding claims, such that the content of furfuryl alcohol of the sizing composition is less than 0.1%.

10. Process according to any one of the preceding claims, such that the said sizing composition additionally comprises one or more adjuvants preferably chosen from coupling agents, dust-preventing agents, hydrophobic agents, retardants, antistatic agents, softening agents, conditioning agents, colouring agents or opacifying agents.

11. Process according to Claim 10, such that the fraction by weight of adjuvants and additives of the solid part of the sizing composition does not exceed 25%, preferably 20%.

12. Process according to any one of the preceding claims, such that the said sizing composition exhibits a pH of between 3.0 and 10, preferably between 4.0 and 9.0, in particular between 5.0 and 8.5, and ideally between 6.0 and 8.0.

13. Process according to any one of the preceding claims, such that the application of the said sizing composition of stage a) to the said mineral fibres is carried out by spraying by means of spray nozzles.

14. Process according to any one of the preceding claims, such that stage c) comprises the heating of the said assembly of mineral fibres at a temperature of between 100°C and 250°C for a period of time of between 1 minute and 10 minutes, preferably in a thermally regulated atmosphere.

15. Product capable of being obtained by a process according to any one of the preceding claims.
